Europäisches Patentamt

European Patent Office

Office européen des brevets

(11) Veröffentlichungsnummer: **0 022 127**

A2

(12) **EUROPÄISCHE PATENTANMELDUNG**

(21) Anmeldenummer: 80890067.4

(22) Anmeldetag: 12.06.80

(51) Int. Cl.³: **B 29 D 7/14**

(30) Priorität: 21.06.79 AT 4374 79

(43) Veröffentlichungstag der Anmeldung:
07.01.81 Patentblatt 81/1

(84) Benannte Vertragsstaaten:
DE FR GB

(71) Anmelder: Semperit Aktiengesellschaft
Wiedner Hauptstrasse 63
A-1041 Wien(AT)

(72) Erfinder: Mravlag, Kurt, Dipl.-Ing.
Strohgasse 10/4/16
A-1030 Wien(AT)

(74) Vertreter: Kitzmantel, Peter, Dr. et al,
Semperit Aktiengesellschaft Werk Traiskirchen
A-2514 Traiskirchen(AT)

(54) Heiz- oder kühlbare Walzen.

㊐57 Heiz- oder kühlbare Walze für Kalander mit einer axialen
Zu- und Ableitung und mit dieser verbundenen nahe der
Ballenoberfläche angeordneten Peripherbohrungen. Die
Peripherbohrungen sind mit einem Stopfen bzw. einem
Abdichtring verschlossen, der eine verschließbare
Entlüftungsöffnung aufweist.

Fig 2

EP 0 022 127 A2

Case 7317

- 1 -

Heiz- oder kühlbare Walzen

Die Erfindung betrifft heiz- oder kühlbare Walzen, insbesondere für Kalander zur Kunststoff- und Gummiverarbeitung, mit einer axialen Zu- und Ableitung und mit diesen verbundenen, nahe an der Ballenoberfläche angeordneten achsparallelen Längskanälen, deren Enden an den Stirnflächen der Walze mit einem Stopfen bzw. einem Abdichtring abgedichtet sind. Eine derartige Walze ist z.B. der DE-PS 1,132.323 und der US-PS 2,712.924 zu entnehmen.

Diese Art der Temperierung von Walzenoberflächen hat den Vorteil einer geringen Trägheit und wird daher immer häufiger angewendet. Zur Erzielung einer gleichmäßigen Oberflächentemperatur sind häufig drei achsparallele Längskanäle zu einem Kreislauf zusammengefaßt und mit einer jeweils in die axiale Zu- bzw. Ableitung mündenden Radialbohrung versehen. Die Enden der achsparallelen Längskanäle müssen zur Einhaltung der genannten Kreisläufe mit einem Stopfen abgedichtet werden.

Die Temperierung der Ballenoberfläche erfolgt nun durch Aufteilung des axialen Zuleitungsstromes in beispielsweise fünf radiale Zuleitungen (welche aus technischen Gründen nicht exakt in radialer Richtung, sondern in einem Winkel zur Achse von etwa 30 bis 45° verlaufen) zu den jeweils aus drei achsparallelen Längskanälen bestehenden Einheiten. Nach Durchlauf der Einheiten fließt das Medium wiederum über die gleiche Anzahl von Radialbohrungen ab zu der axialen Ableitung.

- 2 -

Ein besonderes Problem dieses Temperiersystems stellt die Entlüftung dar. Dazu wurde in der Nähe der axialen Rückflußleitung am Rotationsdichtungskopf ein Steigrohr mit einem Entlüftungsverschluß angeordnet. Damit konnten jedoch immer nur eingeschlossene Luftsäcke der unteren Walzenhälfte entfernt werden, die Luftsäcke der oberen Hälfte sind insofern nicht durch das Steigrohr zu beseitigen, als diese über die Radialleitungen niedrigeres Niveau wiederum annehmen müßten, um dann im Steigrohr aufsteigen zu können. Die DE-PS 1,132.323 beschreibt eine relativ komplizierte Konstruktion, die aus sehr vielen komplizierten Einzelheiten bestehen, welche beim Entlüftungsvorgang nicht mehr zusammengehalten werden können.

Ziel der vorliegenden Erfindung ist die Schaffung einer besseren, vollständigen Entlüftungsmöglichkeit von Walzen der eingangs genannten Gattung, indem zumindest ein Stopfen bzw. der Abdichtring eine durch eine Schraube verschließbare Entlüftungsöffnung aufweist. Wird nun der erfindungsgemäße, mit einer Entlüftungsbohrung versehene Stopfen durch Drehen der Walze auf sein höchstmögliches Niveau gebracht, so kann damit auch die obere Walzenhälfte problemlos entlüftet werden.

Das Entlüften geht dann so vor sich, daß beim Befüllen der Walze die Entlüftungsbohrung von Anfang an geöffnet ist. Dadurch kann ein Großteil der in den Bohrungen enthaltenen Luft entweichen. Wenn nun gemeinsam mit der Luft auch Medium auszutreten beginnt, muß die Walze ständig vor- und zurückgedreht und gegebenenfalls die Zufuhr neuen Mediums unterbrochen werden, um der restlichen, in den Bohrungen befindlichen Luft, das Aufsteigen zur Entlüftungsbohrung zu ermöglichen. Tritt nun ausschließlich Medium aus, kann das Entlüftungsventil geschlossen werden.

- 3 -

Durch die vollständige Entlüftung erübrigt sich auch die bisher ausgeübte Praxis, die Walze bei einer Temperatur von über 60° C auch im Leerlauf rotieren zu lassen, um Verzugserscheinungen infolge ungleichmäßiger Temperierung über die Oberfläche zu unterbinden.

Ein weiterer Vorteil durch das Erfindungsmerkmal ergibt sich daraus, daß im Falle einer Außerbetriebnahme und anschließenden Lagerung der Walze die Möglichkeit der restlosen Entfernung des Mediums gegeben ist, indem die Entlüftungsbohrung als Ablaßöffnung auf das unterste Niveau gebracht wird. Damit entfällt die kostspielige Lagerung der Walzen in geheizten Lagerräumen.

Anstelle von Stopfen können auch Dichtringe verwendet werden, die jeweils sämtliche Bohrungsenden einer Seite abdecken.

Im folgenden wird die Erfindung anhand einer Zeichnung beispielshaft näher erläutert:

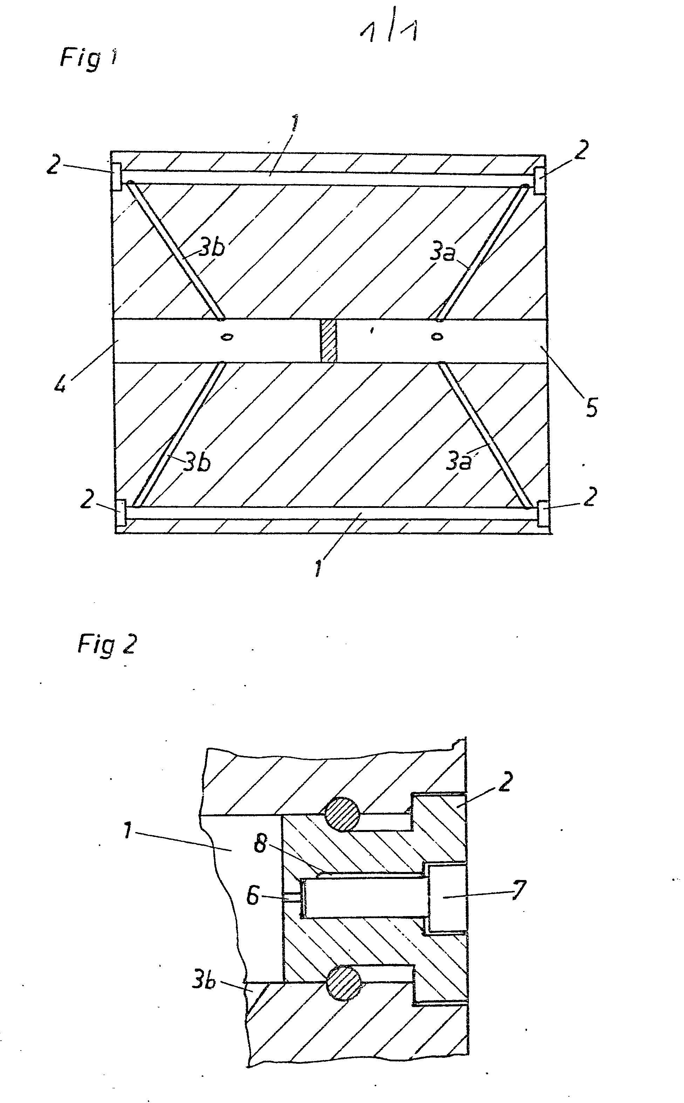

Es zeigen Fig. 1 einen Querschnitt durch eine Walze,
Fig. 2 einen vergrößerten Querschnitt durch einen Stopfen.

Die achsparallelen Längskanäle 1 sind endseitig durch einen Stopfen 2 abgedichtet und durch als Radialborhungen bezeichnete Bohrungen 3a, 3b mit der axialen Zu- bzw. Ableitung 4, 5 verbunden.

Das in die Zuleitung 5 strömende Medium wird in die Radialbohrungen 3a gedrängt, welche aus Fertigungsgründen meist einen geringeren Querschnitt haben als die achsparallelen Längskanäle 1. Das ist auch der Grund, warum es im Bereich

- 4 -

des Überganges von der Radialbohrung zu dem achsparallelen Längskanal zu großen Turbulenzen und damit auch zu erhöhter Luftsackbildung kommt- Nach Durchströmen des ersten achsparallelen Längskanales 1 wird das Medium in den zweiten und von diesem in den dritten achsparallelen Längskanal 1 mäanderförmig weitergeleitet, von wo es über eine Radialbohrung 3b in die axiale Ableitung 4 fließt.

Die in Fig. 2 dargestellte Entlüftungsbohrung 6 geht durch einen Teil des Stopfes 2 und wird durch die Stirnfläche einer Schraube 7 abgedichtet. Ein im Vergleich zur Schraubenlänge kürzerer Überströmkanal 8 ermöglicht nach wenigen Drehungen der Schraube 7 in Öffnungsrichtung einen Austritt von Luft und Medium.

- 1 -

Patentanspruch:

Heiz- oder kühlbare Walze, insbesondere für Kalander zur
Kunststoff- und Gummiverarbeitung, mit einer axialen Zu-
und Ableitung und mit diesen verbundenen, nahe an der
Ballenoberfläche angeordneten achsparallelen Längskanälen,
deren Enden an den Stirnflächen der Walze mit einem
Stopfen bzw. einem Abdichtring abgedichtet sind, dadurch
gekennzeichnet, daß zumindest ein Stopfen (2) bzw. der
Abdichtring eine durch eine Schraube (7) verschließbare
Entlüftungsöffnung (6) aufweist.

Fig 1

Fig 2